## Europäisches Patentamt

(19) **European Patent Office**

**Office européen des brevets**

(11) Numéro de publication: **0 251 901 B1**

(12) **FASCICULE DE BREVET EUROPEEN**

(45) Date de publication du fascicule du brevet:
26.09.90

(51) Int. Cl.⁵: **G01V 1/20, H04R 17/00**

(21) Numéro de dépôt: 87401458.2

(22) Date de dépôt: 25.06.87

(54) Dispositif capteur d'ondes de pression du type piézo-électrique à structure continue et procédé pour sa fabrication.

(30) Priorité: 04.07.86 FR 8609880

(43) Date de publication de la demande:
07.01.88 Bulletin 88/1

(45) Mention de la délivrance du brevet:
26.09.90 Bulletin 90/39

(84) Etats contractants désignés:
BE DE GB IT NL

(56) Documents cités:
EP-A- 0 057 982
FR-A- 2 271 733

(73) Titulaire: **INSTITUT FRANCAIS DU PETROLE, 4, Avenue de Bois-Préau, F-92502 Rueil-Malmaison(FR)**

(72) Inventeur: **Gautier, Thierry, 54, quai Maréchal Joffre, F-77000 Melun(FR)**
Inventeur: **Beauducel, Claude, 8, rue Talon, F-60119 Henonville(FR)**

ACTORUM AG

## Description

L'invention a pour objet un dispositif capteur d'ondes de pression du type piézo-électrique et un procédé pour sa fabrication.

Le dispositif selon l'invention trouve ses applications notamment dans le domaine de la prospection sismique où l'on utilise des dispositifs de réception constitués d'un nombre souvent élevé de récepteurs sismiques disposés à intervalles les uns des autres et connectés à un laboratoire central d'enregistrement. Des ondes acoustiques étant émises dans le sol, on capte au moyen de cet ensemble de récepteurs les signaux qui ont été réfléchis ou réfractés par les différentes interfaces du sous-sol. L'enregistrement et le traitement des signaux captés permettent d'obtenir un ensemble de traces représentatives de la configuration du sous-sol, comme il est bien connu.

Chaque récepteur comporte un capteur élémentaire ou plusieurs capteurs interconnectés en série et/ou en parallèle, pour accroître leur sensibilité en tension et en charge, respectivement. Pour les applications marines, les récepteurs sont disposés tout le long d'une gaine étanche ou flûte sismique remorquée en immersion par un navire.

Les capteurs couramment utilisés sont du type piézo-électrique. Ils comportent des disques de dimensions relativement faibles réalisés en un matériau piézo-électrique et associés chacun à une paire d'électrodes. Ces disques sont contenus dans des boîtiers comportant une ou plusieurs faces transparentes aux ondes acoustiques. De tels capteurs sont décrits par exemple dans le brevet français N. 1.556.971 et deux de ses additions N. 95.668 et 96.556.

Par le brevet français N. 2.145.099, on connaît un dispositif capteur constitué d'au moins un élément sensible en forme de bande. Cette bande est d'un ruban souple en matériau piézo-électrique et deux électrodes de part et d'autre du ruban et plus généralement de plusieurs éléments sensibles interconnectés en série, de manière à augmenter la sensibilité de l'ensemble en tension électrique. Suivant un agencement, on constitue, un récepteur sismique en enroulant en spirale sur un noyau cylindrique isolant une première bande sensible associée à ses deux électrodes. Une bande souple isolante est superposée par enroulement à la première bande sensible. Par dessus, on enroule encore une seconde bande sensible suivant une spirale de sens inverse de la première. Des bagues en contact respectivement avec les électrodes des deux bandes sensibles sont reliées par des fils conducteurs de manière à réaliser une interconnexion en série.

Dans sa réalisation pratique, un tel agencement présente des inconvénients. La connexion électrique des électrodes des deux bandes sensibles est effectuée généralement aux extrémités du support par l'intermédiaire des bagues conductrices. La résistance des films conducteurs constituant les électrodes n'étant pas négligeable, dans une combinaison en parallèle des deux bandes sensibles par exemple, la longueur des électrodes peut contribuer à limiter la bande passante du capteur.

En outre, il se prête mal à une réalisation industrielle dans la mesure où le positionnement des bagues collectrices à chaque extrémité de chaque section de récepteur, doit être effectué à plusieurs stades différents de la fabrication, de manière à se trouver en contact avec les électrodes qui leur correspondent avant de procéder à l'enroulement d'autres couches.

Le dispositif capteur et le procédé de fabrication selon l'invention permettent d'éviter les inconvénients ci-dessus mentionnés.

Le dispositif capteur comporte au moins deux éléments sensibles constitués chacun d'un ruban en matériau synthétique plastique possédant des propriétés piézo-électriques et associé à deux électrodes disposées de part et d'autre du ruban, les deux éléments sensibles étant superposés sur un support tubulaire et disposés suivant deux enroulements hélicoïdaux croisés, et au moins un ensemble collecteur en contact électrique avec les électrodes associées aux deux éléments sensibles.

Il est caractérisé en ce qu'il comporte un ruban conducteur souple transparent aux ondes acoustiques, enroulé en hélice et superposé à l'enroulement inférieur de manière à recouvrir les bords latéraux de toutes ses spires, le ruban conducteur établissant le contact entre l'électrode extérieure de l'élément sensible qu'il recouvre et l'électrode intérieure de l'élément sensible qui lui est superposé.

Cet ensemble collecteur comporte par exemple une première bande conductrice entourant le support tubulaire et au moins une seconde bande conductrice plus étroite que la première, les deux bandes conductrices étant superposées et séparées l'une de l'autre par une couche isolante, et en ce que l'élément sensible inférieur est en contact avec la bande conductrice la plus large.

Avec cet agencement, on réalise un dispositif capteur comportant deux éléments sensibles connectés en parallèle par la mise en contact électrique des deux électrodes. Le ruban conducteur mince interposé entre les deux enroulements est transparent aux ondes acoustiques et transmet donc avec une atténuation négligeable les pressions à mesurer. Par le contact étroit qu'il a avec les électrodes des deux éléments sensibles, les déformations mécaniques du support tubulaire et résultant de flexions par exemple, sont également transmises aux deux éléments sensibles, ce qui facilite la compensation des tensions parasites nées de ces déformations. En outre, le ruban conducteur permet une parfaite mise en contact des électrodes en regard des deux éléments sensibles ce qui diminue la résistance électrique des connexions et améliore la fiabilité électrique.

En outre, les électrodes de chaque élément sensible étant souvent de largeur égale à celle du substrat piézo-électrique, il peut se produire des courts-circuits entre des spires aux croisement des deux enroulements. Le ruban conducteur en recouvrant les bords de l'élément sensible inférieur, évite cet inconvénient.

Le procédé qui est aussi l'objet de l'invention concerne la réalisation d'un dispositif capteur tel qu'il est défini ci-dessus. Il est caractérisé en ce qu'il comporte:

- l'utilisation d'un support tubulaire de grande longueur sur lequel, à intervalles réguliers, sont fixés des ensembles collecteurs comportant chacun une première bande conductrice entourant le support tubulaire, deux secondes bandes conductrices adjacentes plus étroites que la première bande, ces deux secondes bandes conductrices étant superposées à la première et séparées de celle-ci par une couche isolante, une partie de la première bande, à chacune de ses extrémités, n'étant pas recouverte par les deux secondes bandes conductrices;
- l'enroulage hélicoïdal, tout au long du support tubulaire, successivement du premier élément sensible, du ruban conducteur et du second élément sensible;
- le sectionnement de l'élément tubulaire pourvu de ses enroulements, dans l'intervalle entre deux secondes bandes conductrices adjacentes;
- le découpage des enroulements à l'extrémité de chaque section, de manière à mettre les électrodes associées à l'élément sensible inférieur en contact électrique respectivement avec la première bande conductrice et une seconde des bandes conductrices; et
- la fixation de bagues en matériau conducteur respectivement autour de la première bande conductrice, d'une seconde bande conductrice et d'une électrode de l'élément sensible extérieur.

Le procédé selon l'invention permet de faciliter la réalisation en série d'un grand nombre de capteurs à partir d'un support tubulaire de grande longueur pré-équipé d'ensembles collecteurs et d'obtenir une très bonne qualité de fabrication.

D'autres caractéristiques et avantages du dispositif et du procédé selon l'invention apparaîtront à la lecture de la description ci-après de deux modes de réalisation donnés à titre d'exemples non limitatifs, et en se référant aux dessins annexés où :

- la figure 1 montre la support tubulaire et les différents enroulements qui le recouvrent;
- la figure 2 montre une partie d'un support tubulaire portant deux ensembles collecteurs, avant l'enroulage des éléments sensibles et du ruban conducteur;
- la figure 3 montre schématiquement en coupe et très grossies pour la clarté de la description, une partie du support tubulaire au voisinage d'un ensemble collecteur et les connexions qui sont établies entre celui-ci et les différents enroulements; et
- la figure 4 montre une vue analogue d'un autre mode de réalisation du dispositif.

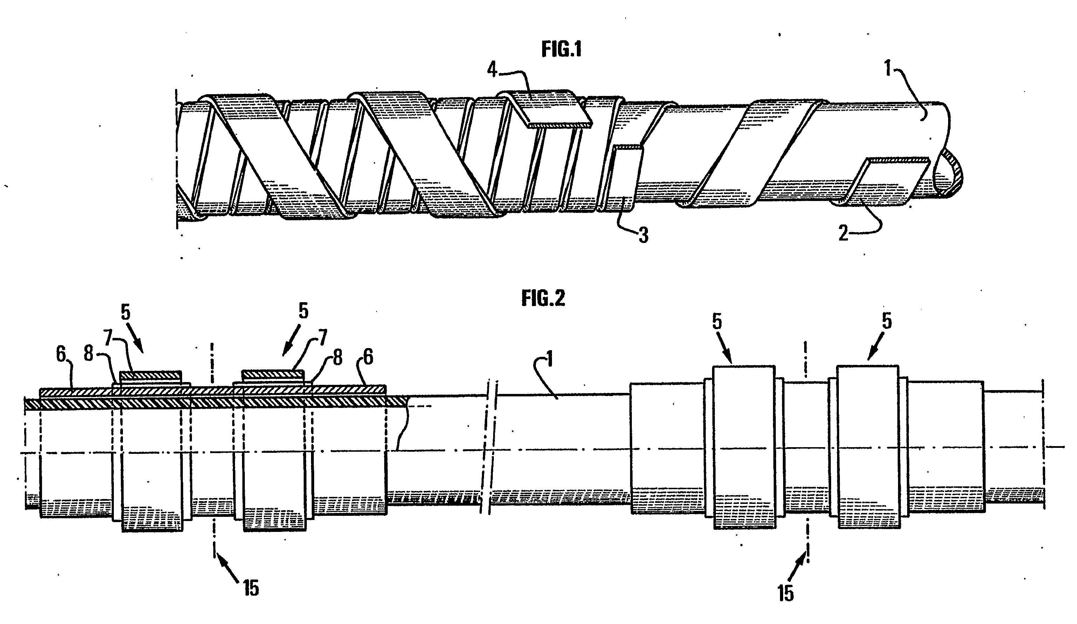

Le dispositif capteur comporte (fig. 1) un support tubulaire allongé 1 réalisé en un matériau plastique suffisamment rigide pour résister à l'écrasement mais suffisamment souple pour subir des flexions. Ceci est nécessaire pour de nombreuses applications, en prospection sismique marine notamment où les capteurs sont disposés à l'intérieur de flûtes sismiques. Elles sont enroulées sur des tourets et, pour les besoins de la prospection, sont déroulées derrière un navire et remorquées en immersion. Au cours des manoeuvres les capteurs sismiques inclus subissent des contraintes mécaniques très diverses. Pour donner aux flûtes sismiques une certaine flottabilité, on les remplit généralement d'hydrocarbures. En conséquence on choisit pour réaliser les supports tubulaires des matériaux plastiques résistant aux hydrocarbures.

Sur le support tubulaire est enroulé en hélice suivant une première direction, un élément sensible 2 d'un type connu comportant une bande de matériau plastique piézo-électrique, et de part et d'autre, deux films métalliques servant d'électrodes. Le pas d'enroulement de l'élément sensible est choisi, supérieur à sa largeur afin d'éviter tout recouvrement des spires. Par dessus, est enroulé dans le même sens un ruban conducteur 3 constitué par exemple d'une bande mince de cuivre. Les spires sont jointives ou légèrement disjointes et le ruban est disposé par rapport au premier élément sensible enroulé de manière qu'il recouvre ses bords latéraux. Un second élément sensible 4 est enroulé en hélice par dessus le ruban conducteur 3. Le pas entre spires est identique à celui du premier élément sensible 3 mais le sens d'enroulement est opposé au premier. Le ruban de cuivre évite les courts-circuits qui peuvent se produire aux intersections de deux spires de sens contraire et comme on l'a vu, il facilite le couplage tant mécanique qu'électrique des électrodes en regard l'une de l'autre des deux éléments sensibles.

Pour la réalisation en série des dispositif capteurs, on utilise un support tubulaire de grande longueur (de quelques mètres à quelques dizaines de mètres et même beaucoup plus) sur lequel on fixe à intervalles réguliers (1 m par exemple) des ensembles collecteurs 5 (fig. 2) constitués chacun d'une première bande ou bague métallique 6 à laquelle on superpose deux secondes bandes ou bagues métalliques 7. Deux couches isolantes 8 sont interposées respectivement entre la première bague 6 et chacune des deux bagues secondaires. Les deux bagues secondaires sont séparées l'une de l'autre. La largeur de la première bague 6 est choisie de manière que ses deux parties terminales opposées 9 soient découvertes.

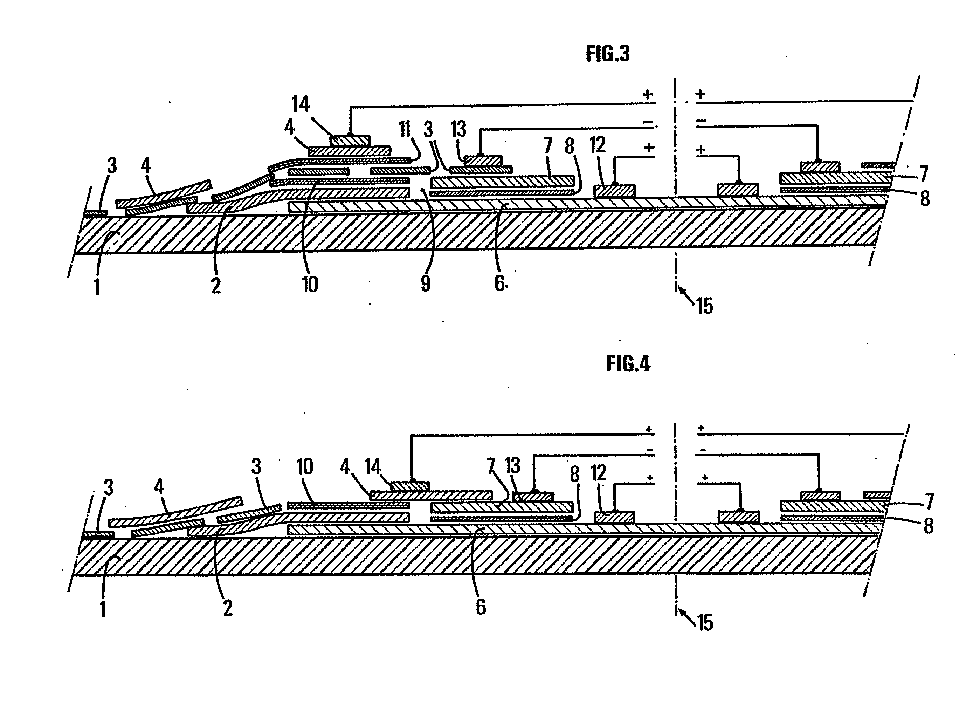

Avec une machine à bobiner d'un type connu, on enroule sur toute la longueur du support tubulaire le premier élément sensible 2 puis dans le même sens le ruban conducteur 3. Par dessus, on enroule le second élément sensible 4. On sectionne alors le support tubulaire au niveau de tous les ensembles collecteurs 5 (ou de certains d'entre entre eux selon la longueur des capteurs que l'on souhaite obtenir). La découpe est effectuée suivant le plan médian 15 entre les deux bagues secondaires 7. On raccourcit alors les enroulements de manière à réaliser les contacts électriques montrés plus en détail sur les figures 3 et 4.

Suivant le mode de réalisation de la figure 3, le premier élément sensible 2 est découpé de manière que l'électrode inférieure de sa dernière spire vienne s'appuyer contre la partie découverte 9 de la première bague 6 (fig. 2). Une couche isolante 10 est enroulée par dessus. Le ruban conducteur est découpé de manière que sa dernière spire vienne en contact avec la seconde bague 7. Une autre couche isolante 11 est enroulée sur le ruban conducteur au niveau de la partie découverte et donc superposée à la couche isolante 10. On découpe alors le second élément sensible 4 de manière que sa dernière spire vienne s'appliquer contre la couche isolante 11.

Trois bagues métalliques de fixation maintiennent un contact étroit entre les enroulements et assurent les connexions électriques. Une première 12 est en contact de la première bague 6. Une seconde 13 applique le ruban conducteur 3 contre la seconde bague 7. Une troisième 14 est serrée par dessus le second élément sensible 4 au niveau des couches isolantes 10 et 11.

Des conducteurs électriques peuvent être soudés sur les trois bagues. Selon les cas, on relie directement les bagues 12 et 14 de manière à mettre les deux éléments sensibles en parallèle, ou bien on prélève séparément les tensions électriques qu'ils engendrent entre les bagues 12 et 13 d'une part et les bagues 13 et 14 d'autre part. Les deux tensions sont alors appliquées à des étages d'amplification et de filtrage (non représentés) avant d'être éventuellement additionnées.

Dans ce mode de réalisation les deux éléments sensibles sont coupés suivant la même section droite et c'est le ruban conducteur 3 qui est prolongé jusqu'à la seconde bague.

Suivant le mode de réalisation de la figure 4, le ruban conducteur 3 est interrompu à proximité de la couche isolante 10 et le second élément sensible est prolongé de manière que sa dernière spire vienne en contact de la second bague 7. Ici, c'est l'électrode inférieure du second élément sensible 4 qui assure le transfert des charges électriques du ruban conducteur 3 jusqu'à la bague 14.

Le second mode de réalisation présente l'avantage d'être moins épais dans sa partie terminale. Pour conserver aux deux éléments sensibles une longueur identique et permettre par là une meilleure compensation des tensions parasites dues aux flexions du support tubulaire, on raccourcit symétriquement le second élément sensible 4 à l'extrémité opposée du dispositif capteur.

L'espace intermédaire où passe le plan de sectionnement 15 entre les deux bagues secondaires 7 d'un même ensemble collecteur 5 étant dépourvu d'enroulement, la fixation des capteurs à leur support (à l'intérieur d'une flûte sismique par exemple) se fait par des colliers (non représentés) serrés autour du support tubulaire, au niveau de cet espace intermédiaire.

On ne sortirait pas du cadre de l'invention en enroulant les deux éléments sensibles 2, 4, à spires jointives sur un support tubulaire et en fixant bords à bords les enroulements réalisés, de manière à pouvoir ensuite ôter le support tubulaire.

## Revendications

1. Dispositif capteur d'ondes de pression de structure continue du type piézo-électrique comportant au moins deux éléments sensibles (2, 4) chacun d'eux étant constitué d'un ruban en matériau synthétique plastique possédant des propriétés piézo-électriques et associé à deux électrodes disposées de part et d'autre du ruban, les deux éléments sensibles étant superposés (1) et disposés suivant deux enroulements hélicoïdaux croisés, et au moins un ensemble collecteur (5) en contact électrique avec les électrodes associées aux deux éléments sensibles, caractérisé en ce qu'il comporte un ruban conducteur souple (3) transparent aux ondes acoustiques, enroulé en hélice et superposé à l'enroulement inférieur de manière à recouvrir les bords latéraux de toutes ses spires, le ruban conducteur (3) établissant le contact entre l'électrode extérieure de l'élément sensible (2) qu'il recouvre et l'électrode intérieure de l'élément sensible (4) qui lui est superposé.

2. Dispositif selon la revendication 1, caractérisé en ce que chaque ensemble collecteur (5) comporte une première bande conductrice (6) entourant le support tubulaire (1) et au moins une seconde bande conductrice (7) plus étroite que la première, les deux bandes conductrices étant superposées et séparées l'une à l'autre par une couche isolante (8), et en ce que l'élément sensible inférieur (2) est en contact avec la bande conductrice la plus large.

3. Dispositif selon la revendication 2, caractérisé en ce que le ruban conducteur (3) est enroulé par dessus le premier élément sensible (2) jusqu'à venir en contact avec la bande conductrice supérieure (7) plus étroite, les deux éléments sensibles étant interrompu suivant une même section transversale du support tubulaire et venant se superposer par l'intermédiaire d'une couche isolante (10) sur la partie non recouverte de la bande conductrice la plus large (6), et en ce que chaque ensemble collecteur comporte également trois bagues (12, 13, 14) réalisées en un matériau conducteur et en contact respectivement avec les deux bandes conductrices (6, 7) et une électrode de l'élément sensible extérieur.

4. Dispositif selon la revendication 2, caractérisé en ce que l'élément sensible inférieur (2) et l'élément sensible supérieur (4) sont respectivement en contact avec la bande conductrice inférieure (6) et la bande conductrice supérieure (7) plus étroite, le ruban conducteur (3) étant interrompu au voisinage d'une extrémité de la bande conductrice inférieure (6) et en ce que chaque ensemble collecteur comporte également trois bagues (12, 13, 14) réalisées en un matériau conducteur et en contact respectivement avec les deux bandes conductrices (6, 7) et une électrode de l'élément sensible extérieur (4).

5. Procédé pour la réalisation d'un dispositif capteur d'ondes de pression de structure continue du type piézo-électrique comportant au moins deux éléments sensibles (2, 4) constitués chacun d'un ruban en matériau synthétique plastique possédant des propriétés piézo-électriques et associés à deux électrodes disposées de part et d'autre du ruban, les deux éléments sensibles étant superposés sur un support et disposés suivant deux enroulements hélicoïdaux croisés, caractérisé en ce qu'il comporte
— l'utilisation d'un support tubulaire (1) de grande longueur sur lequel, à intervalles réguliers, sont fixés des ensembles collecteurs (5) comportant chacun une première bande conductrice (6) entourant le support tubulaire, deux secondes bandes conductrices (7) adjacentes plus étroites que la première bande, ces deux secondes bandes conductrices étant superposées à la première bande et séparées de celle-ci par une couche isolante (8), une partie de la première bande (6), à chacune de ses extrémités, n'étant pas recouverte par les deux secondes bandes conductrices (7);

— l'enroulage hélicoïdal, tout au long du support tubulaire, successivement du premier élément sensible (2) d'un ruban conducteur (3) et du second élément sensible (4);

— le sectionnement de l'élément tubulaire (1) pourvu de ses enroulements dans l'intervalle entre deux secondes bandes conductrices adjacentes;

— le découpage des enroulements à l'extrémité de chaque section, de manière à mettre les électrodes associées à l'élément sensible inférieur (2) en contact électrique respectivement avec la première bande conductrice (6) et une seconde des bandes conductrices (7); et

— la fixation de bagues (12, 13, 14) en matériau conducteur respectivement autour de la première bande conductrice (6) d'une seconde bande conductrice (7) et d'une électrode de l'élément sensible extérieur (4).

6. Procédé selon la revendication 5, caractérisé en ce qu'il comporte le découpage du ruban conducteur (3) de manière qu'il vienne en contact de la seconde bande conductrice (7) les deux éléments sensibles (2, 4) étant sectionnés à la même longueur et étant mis en contact respectivement avec la première bande conductrice (6) et avec une bague conductrice (14).

7. Procédé selon la revendication 5, caractérisé en ce qu'il comporte le découpage des deux éléments sensibles (2, 4) à des longueurs inégales, de manière qu'ils soient en contact électrique respectivement avec la première bande conductrice (6) et avec une seconde bande conductrice (7), le ruban conducteur (3) étant sectionné au voisinage d'un bord latéral de la première bande conductrice (6).

## Claims

1. Pressure wave sensor device with a continuous structure of the piezoelectric type comprising at least two sensitive elements (2, 4) each of them consisting of a ribbon of a synthetic plastic material having piezoelectric properties and associated with two electrodes disposed on each side of the ribbon, the two sensitive elements being superimposed (1) and disposed in two crossed helical windings, and at least one collector assembly (5) in electrical contact with the electrodes associated with the two sensitive elements, characterised in that it comprises a flexible conducting ribbon (3) transparent to sound waves, wound helically and superimposed on the lower winding so as to cover the lateral edges of all its turns, the conducting ribbon (3) establishing contact between the external electrode of the sensitive element (2) which it covers and the internal electrode of the sensitive element (4) which is superimposed on it.

2. Device as claimed in claim 1, characterised in that each collector assembly (5) comprises a first conducting strip (6) surrounding the tubular support (1) and at least a second conducting strip (7) narrower than the first, the two conducting strips being superimposed and separated from each other by an insulating layer (8), and in that the lower sensitive element (2) is in contact with the widest conducting strip.

3. Device as claimed in claim 2, characterised in that the conducting ribbon (3) is wound on top of the first sensitive element (2) until it comes into contact with the narrower upper conducting strip (7), the two sensitive elements being interrupted in the same cross section of the tubular support and being superimposed through an insulating layer (10) on the uncovered part of the widest conducting strip (6), and in that each collector assembly also comprises three rings (12, 13, 14) made from a conducting material and in contact respectively with the two conducting strips (6, 7) and an electrode of the external sensitive element.

4. Device as claimed in claim 2, characterised in that the lower sensitive element (2) and the upper sensitive element (4) are in contact respectively with the lower conducting strip (6) and the narrower upper conducting strip (7), the conducting ribbon (3) being interrupted close to one end of the lower conducting strip (6) and in that each collector assembly also comprises three rings (12, 13, 14) made from a conducting material in contact respectively with the two conducting strips (6, 7) and an electrode of the external sensitive element (4).

5. Method for producing a pressure wave sensor device with a continuous structure of the piezoelectric type comprising at least two sensitive elements (2, 4) each consisting of a ribbon of synthetic plastic material having piezoelectric properties and associated with two electrodes disposed on each side of the ribbon, the two sensitive elements being superimposed on a support and disposed in two crossed helical windings, characterised in that it comprises:

— the use of a tubular support (1) of great length on which, at regular intervals, collector assemblies (5) are fixed each comprising a first conducting strip (6) surrounding the tubular support, two second adjacent conducting strips (7), narrower than the first strip, these two second conducting strips being superimposed on the first strip and separated from it by an insulating layer (8), a part of the first strip (6), at each of its ends, not being covered by the two second conducting strips (7);

— the helical winding, along the entire length of the tubular support, of successively the first sensitive element (2), of a conducting ribbon (3) and the second sensitive element (4);

— the sectioning of the tubular element (1) provided with its windings, in the gap between two second adjacent conducting strips;

— the cutting of the windings at the end of each section, so as to put the electrodes associated with the lower sensitive element (2) in electrical contact respectively with the first conducting strip (6) and a second one of the conducting strips (7); and
– the fixing of rings (12, 13, 14) of conducting material around respectively the first conducting strip (6), a second conducting strip (7) and an electrode of the outer sensitive element (4).

6. Method as claimed in claim 5, characterised in that it comprises the cutting of the conducting ribbon (3) so that it comes into contact with the second conducting strip (7), the two sensitive elements (2, 4) being cut to the same length and being placed in contact respectively with the first conducting strip (6) and a conducting ring (14).

7. Method as claimed in claim 5, characterised in that it comprises the cutting of the two sensitive elements (2, 4) to unequal lengths, so that they are in electrical contact respectively with the first conducting strip (6) and a second conducting strip (7), the conducting ribbon (3) being cut in the vicinity of a lateral edge of the first conducting strip (6).

## Patentansprüche

1. Vorrichtung zum Empfang von Druckwellen kontinuierlichen Aufbaus vom piezoelektrischen Typ mit wenigstens zwei empfindlichen Elementen (2, 4), von denen ein jedes gebildet wird durch ein Band aus einem synthetischen plastischen Material, welches piezoelektrische Eigenschaften besitzt und zwei zu beiden Seiten des Bandes angeordneten Elektroden zugeordnet ist, wobei die beiden empfindlichen Elemente einander überlagert (1) und entsprechend zwei gekreuzten spiralförmigen Wicklungen angeordnet sind und mit wenigstens einer Sammleranordnung (5) in elektrischem Kontakt mit den den beiden empfindlichen Elementen zugeordneten Elektroden, dadurch gekennzeichnet, daß sie ein für akustische Wellen transparentes nachgiebiges Leiterband (3) umfaßt, das spiralförmig gewickelt und der unteren Wicklung derart überlagert ist, daß die seitlichen Ränder sämtlicher dieser Windungen abgedeckt sind, wobei das Leiterband (3) den Kontakt zwischen der Außenelektrode des empfindlichen Elements (2), welches die Innenelektrode des ihm überlagerten empfindlichen Elements (4) abdeckt, herstellt.

2. Vorrichtung nach Anspruch 1, dadurch gekennzeichnet, daß jede Sammleranordnung (5) ein leitfähiges erstes Band (6), das den röhrenförmigen Träger (1) umgibt und wenigstens ein zweites leitfähiges Band (7), schmaler als das erstere, umfaßt, wobei die beiden leitfähigen Bänder einander überlagert und voneinander durch eine Isolierschicht (8) getrennt sind und daß das untere empfindliche Element (2) mit dem breiteren leitfähigen Band in Kontakt steht.

3. Vorrichtung nach Anspruch 2, dadurch gekennzeichnet, daß das Leiterband (3) oben auf das erste empfindliche Element (2) gewickelt ist, bis es in Kontakt mit dem oberen schmaleren leitfähigen Band (7) kommt, wobei die beiden empfindlichen Elemente längs eines gleichen Querschnitts des röhrenförmigen Trägers unterbrochen sind und sich vermittels einer Isolierschicht (10) auf dem nicht abgedeckten Teil des leitfähigen breiteren Bandes (6) überlagern und daß jede Sammelbandanordnung ebenfalls drei Ringe (12, 13, 14) umfaßt, die aus einem leitfähigen Material und jeweils in Kontakt mit den beiden leitfähigen Bändern (6, 7) sowie eine Elektrode des empfindlichen Außenelements hergestellt sind.

4. Vorrichtung nach Anspruch 2, dadurch gekennzeichnet, daß das empfindliche untere Element (2) und das empfindliche obere Element (4) jeweils in Kontakt mit dem leitfähigen unteren Band (6) und dem oberen schmaleren leitfähigen Band (7) stehen, wobei das leitfähige Band (3) benachbart einem Ende des leitfähigen unteren Bandes (6) unterbrochen ist und daß jede Sammleranordnung auch drei Ringe (12, 13, 14) umfaßt, die aus einem leitfähigen Material und in Kontakt jeweils mit den beiden leitfähigen Bändern (6, 7) und einer Elektrode des empfindlichen Außenelements (4) hergestellt sind.

5. Verfahren zur Herstellung einer Druckwellenempfangsvorrichtung kontinuierlichen Aufbaus vom piezoelektrischen Typ mit wenigstens zwei empfindlichen Elementen (2, 4), die je von einem Band aus synthetischem plastischen Material gebildet sind, welches piezoelektrische Eigenschaften besitzt und zwei zu beiden Seiten des Bandes angeordneten Elektroden zugeordnet sind, wobei die beiden empfindlichen Elemente auf einem Träger überlagert und entsprechend zwei schraubenförmigen gekreuzten Wicklungen angeordnet sind, dadurch gekennzeichnet, daß es umfaßt:
– die Verwendung eines röhrenförmigen Trägers (1) großer Länge, auf dem unter regelmäßigen Intervallen Sammleranordnungen (5) befestigt sind, die je ein erstes leitfähiges den röhrenförmigen Träger umschließendes Band umfassen, zwei zweite leitfähige benachbarte Bänder (7) schmaler als das erste Band, wobei diese beiden zweiten leitfähigen Bänder dem ersten Band überlagert und von diesem durch eine Isolierschicht (8) getrennt sind, wobei ein Teil des ersten Bandes (6) an jedem seiner Enden nicht durch die zweiten leitfähigen Ränder (7) abgedeckt ist;
– das spiralförmige Wickeln längs des röhrenförmigen Trägers aufeinanderfolgend des ersten empfindlichen Elements (2) eines leitfähigen Bandes (3) und des zweiten empfindlichen Elements (4);
– das Durchschneiden des röhrenförmigen mit seinen Wicklungen versehenen Elements (1) im Intervall zwischen zwei zweiten leitfähigen benachbarten Bändern;
– das Abschneiden der Wicklungen am Ende jedes Abschnitts, derart, daß die dem empfindlichen unteren Element (2) zugeordneten Elektroden im elektrischen Kontakt jeweils mit dem ersten leitfähigen Band (6) und einem zweiten der leitfähigen Bänder (7) gesetzt werden; und
– die Befestigung der Ringe (12, 13, 14) aus leitfähigem Material jeweils um das erste leitfähige Band (6) eines zweiten leitfähigen Bandes (7) und einer Elektrode des empfindlichen äußeren Elements (4).

6. Verfahren nach Anspruch 5, dadurch gekennzeichnet, daß es das Abschneiden des leitfähigen Bandes (3) derart umfaßt, daß es in Kontakt mit dem zweiten leitfähigen Band (7) kommt, wobei die beiden empfindlichen Elemente (2, 4) auf die gleiche Länge geschnitten werden und jeweils mit dem ersten leitfähigen Band (6) und einem leitfähigen Band (14) kontaktiert werden.

7. Verfahren nach Anspruch 5, dadurch gekennzeichnet, daß es das Abschneiden der beiden empfindlichen Elemente (2, 4) auf ungleiche Längen derart umfaßt, daß sie in elektrischem Kontakt jeweils mit dem ersten leitfähigen Band (6) und einem zweiten leitfähigen Band (7) sind, wobei das leitfähige Band (3) benachbart einem seitlichen Rand des ersten leitfähigen Bandes (6) geschnitten wird.

FIG.1

FIG.2

FIG.3

FIG.4